# FASCICULE DE BREVET EUROPEEN

(11) **EP 0 861 579 B1**
(45) Date de publication et mention de la délivrance du brevet: **05.12.2001**
(21) Numéro de dépôt: 98400473.9
(22) Date de dépôt: 27.02.1998
(51) Int. Cl.: A01B 49/06, A01B 45/00

(54) **Procédé et dispositif de remise en état de surfaces gazonnées**
Rasenwiederherstellungsverfahren und -Vorrichtung
Turf restoring process and device

(30) Priorité: 28.02.1997 FR 9702402
(43) Date de publication de la demande: 02.09.1998
(73) Titulaire: Intergreen France, 92100 Boulogne-Billancourt (FR)
(72) Inventeur: Hurlus, Jean-Michel, 59380 Crochte (FR)
(74) Mandataire: Wagret, Frédéric

(56) Documents cités:
- EP-A- 0 466 658
- EP-A- 0 548 890
- FR-A- 2 190 977
- FR-A- 2 722 361
- GB-A- 1 174 281
- GB-A- 2 187 372
- US-A- 3 247 812
- US-A- 5 140 917
- US-A- 5 535 831

## Description

La présente invention concerne un procédé pour entretenir et remettre en état des surfaces au sol, ainsi qu'un dispositif pour sa mise en oeuvre.

L'invention est plus particulièrement applicable aux surfaces gazonnées à usage sportif, appelées à subir en cours d'utilisation un piétinement important par des sportifs, provoquant l'arrachement du gazon.

Les surfaces en question sont également soumises aux multiples passages de machines d'entretien. Les utilisateurs et/ou les machines d'entretien par leurs pressions répétées sur le sol, entraînent le tassement et le compactage du sol en surface, puis en profondeur.

Le compactage du sol a pour effet de réduire progressivement la porosité du sol et en conséquence :
- d'interrompre le développement du chevelu racinaire du gazon par manque d'oxygène; la régression du système radiculaire empêche une alimentation correcte du gazon, le fragilise et diminue sa résistance à l'arrachement et aux agressions extérieures:

- d'inhiber l'activité biologique du sol au travers de sa faune et de sa flore par manque d'air. L'évolution des matières organiques produite est altérée. L'absence d'air tend à la fossilisation, à la production de gaz nocif (méthane ou gaz de marais), à la déminéralisation, à la déshumification, à la déstabilisation et à l'érosion des sols. L'organisation structurelle et fonctionnelle du sol est bouleversée;
- de réduire la perméabilité du sol formant des retenues d'eau en surface lors des précipitations et rendant l'utilisation de la surface difficile, voire impossible;
- de renforcer la résistance du sol à la pénétration d'outils pour l'entretien;
- de ralentir le réchauffement du sol et la reprise de la végétation au printemps;
- de favoriser le développement de graminées à enracinement superficiel telles que le paturin annuel dont la profondeur d'enracinement est de 2 à 3 cm, et en conséquence d'arrachement aisé.

Les procédés connus de traitement des sols comprennent plusieurs étapes successives, réalisées chacune par un dispositif distinct, énumérées ci-après.

On épand sur la surface gazonnée, au moyen de semoirs, des graines de graminée à gazon (appelées sursemis) dans des saignées ou dans des trous. Cependant, de tels sursemis provoquent des levées de graminées, uniquement au niveau des saignées ou des trous, la surface gazonnée restante n'étant pas traitée. Les sursemis se répandent sur la surface de manière aléatoire et, après un temps indéterminé, par tallage.

Ensuite, on aère la surface au moyen d'aérateurs à lames, à couteaux ou à louchets creux ou équivalents, connus de l'homme de l'art. Dans le cas d'aérateurs à louchets, l'importance des carottes de terre extraites oblige à procéder à une opération supplémentaire de ramassage ou d'émiettage des carottes, et donc à faire appel à une machine supplémentaire pour réaliser l'une ou l'autre de ces opérations. Par ailleurs, l'aération n'est réalisée qu'au niveau des trous ou saignées créés, ce qui ne représente en générale que 5 à 10 % de la surface totale à traiter.

Puis on rend moins compact la surface au moyen de décompacteurs à lames vibrantes ou à broches oscillantes, de type connu. La pénétration en force de tels décompacteurs dans le substrat provoque un tassement des parois des saignées soumises à décompaction ou un lissage des trous, créés lors de la deuxième opération.

Dans une quatrième opération, on réalise un apport principalement d'éléments nutritifs pour les graminées d'éléments fertilisants, ou d'éléments permettant d'améliorer la composition du substrat, lesdits éléments, appelés « éléments activateurs », se présentant sous forme solide, par exemple sous forme de granulés. Ledit apport est effectué en surface au moyen d'épandeurs centrifuges ou à bras oscillant, de type connu.

Les dispositifs d'épandage connus nécessitent une opération supplémentaire pour introduire les éléments activateurs sous forme de granulés dans l'épaisseur du substrat. Cette opération est réalisée au moyen d'une grille ou d'un balai traîné sur la surface du sol, permettant de faire glisser puis tomber par gravité les éléments activateurs dans les saignées ou les trous créés lors de l'opération d'aération.

De plus, une partie importante des granulés pénètre dans le substrat sans tomber dans les saignées ou trous. L'absorption par les racines en profondeur de ces éléments activateurs distribués de manière non localisée, est longue, lesdits éléments devant se solubiliser dans le sol et atteindre celles-ci au moyen de l'eau d'infiltration, de pluie ou d'arrosage.

Trois problèmes majeurs résultent de cette lente absorption :

D'une part, le temps de pénétration important des éléments activateurs favorise l'enracinement de surface et rend difficile l'enracinement en profondeur : l'arrachement du gazon est de ce fait facilité et la sensibilité du gazon aux variations climatiques soudaines, telle que la sécheresse, est augmentée ;

D'autre part, certains éléments activateurs utilisés sont sensibles aux rayons ultraviolets de la lumière du jour, ainsi qu'aux variations de températures : la combinaison d'une application en surface et d'une migration en profondeur relativement longue affecte ainsi rapidement leur efficacité dans le temps.

Enfin, une partie des éléments activateurs déposés en surface est ramassée avec les tontes du gazon par des machines prévues à cet effet.

La cinquième opération consiste en l'apport d'éléments, principalement nutritifs pour les graminées, ou d'éléments permettant d'améliorer l'activité biologique du substrat, sous forme liquide. L'amendement est réalisé soit en surface au moyen de pulvérisateurs, soit en profondeur au moyen de différents systèmes d'injection.

Cependant, de tels apports, sous forme liquide en surface, nécessitent par la suite un arrosage important. De plus, les dispositifs de pulvérisation sont munis de réservoirs volumineux dont le remplissage occasionne d'importantes pertes de temps. Le réservoir rempli alourdit de manière considérable le dispositif d'arrosage qui, lors de son passage, accroît la compacité du sol et entraîne les inconvénients précédemment cités (telle que la difficulté accrue de l'assimilation des éléments activateurs par les racines).

Enfin, on réalise le peignage et le balayage de la surface, au moyen de systèmes munis d'outils à mouvements alternatifs, tels que des dents, peignes ou balai.

La septième opération porte sur le roulage d'égalisation au moyen d'un rouleau traîné ou automoteur de type connu. Cette étape permet un plombage des matériaux apportés, créant une cohésion parfaite entre lesdits matériaux et le substrat.

Les procédés de remise en état connus comprennent les opérations précédemment explicitées ou une partie d'entre elles.

Ces opérations sont réalisées par des dispositifs différents, qui doivent être déplacés chacun successivement sur la surface, ce qui augmente le coût (fabrication, maintenance) de l'entretien des sols gazonnés.

La multiplicité des passages successifs de machines différentes augmente la compacité du sol et, en réduit la perméabilité. La quantité d'éléments activateurs susceptibles d'être absorbée par les racines diminue, ainsi que la résistance du gazon à l'arrachement.

Dans ce contexte, la présente invention propose un procédé, ainsi qu'un dispositif pour sa mise en oeuvre, susceptibles de remédier à ces inconvénients et notamment aptes à permettre une aération régulière sur l'ensemble de la surface à traiter, un décompactage sans tassement ni lissage, un émiettage de la terre extraite, l'utilisation d'une machine unique réduisant le coût et la compacité du sol évoqués précédemment.

Un autre objet de l'invention consiste à permettre un ressemis complet, rapide et homogène.

De même, encore un autre objet de l'invention est de permettre un apport d'éléments activateurs en profondeur.

De plus, un objet de l'invention consiste à permettre un mélange cohérent des matériaux apportés avec la terre extraite et une répartition homogène de ceux-ci sur la surface du sol.

Un autre objet de l'invention est de permettre une incorporation des éléments sursemés au substrat.

A cette fin, selon l'invention, le procédé de traitement d'une surface au sol, et plus particulièrement du substrat de terre végétale porteur de graminées tel que du gazon, par déplacement d'un dispositif, est caractérisé en ce que l'on dépose de manière simultanée des éléments activateurs sous forme solide et liquide au fond d'un sillon réalisé à l'aide de moyens de creusement prévus à cet effet.

Selon une forme de réalisation avantageuse, on réalise en une seule opération l'aération du substrat par création d'au moins un sillon, le décompactage du volume total travaillé du substrat, l'émiettage de la terre extraite dudit sillon et sa répartition homogène sur la surface du sol.

De manière avantageuse, on crée ledit sillon à l'aide d'un outil prévu sur le dispositif pénétrant dans le sol et entraîné en rotation dans le sens inverse de celui correspondant au sens d'avancement du dispositif, le dispositif comprenant des moyens propres à réaliser le décompactage du substrat et l'émiettage de la terre extraite du sillon.

Selon des modes préférés de mise en oeuvre :
- on réalise des sillons de largeur comprise entre 4 et 12 millimètres, et de profondeur entre 6 et 15 centimètres;
- on répand les semences de manière homogène et sur toute la largeur du travail.

Selon une forme de réalisation particulière de l'invention, on déplace au moins un soc, prévu sur le dispositif, dans le sillon créé et on dépose les éléments activateurs au fond du sillon après le passage des moyens d'aération/décompactage et du soc.

On réalise de préférence la série de sillons selon une profondeur de réglage modifiable.

Selon une forme de réalisation avantageuse, le débit des semences dispensées et des éléments activateurs est fonction de la vitesse d'avancement du dispositif.

On réalise au moins l'une des opérations suivantes :
◆ un peignage et un balayage de la surface au moyen de systèmes munis d'outils à mouvements alternatifs perpendiculaires au sens de déplacement du dispositif
◆ un roulage.

De manière avantageuse, au moins l'une des opérations d'aération et de décompactage, de sursemis, d'apport en éléments activateurs, de peignage, de balayage et de roulage, est réalisée à l'aide du même dispositif.

La présente invention concerne également le dispositif pour la mise en oeuvre dudit procédé.

Le dispositif, susceptible d'être associé à un véhicule tracteur, est caractérisé en ce qu'il comporte des moyens d'apport en éléments activateurs sous forme solide et liquide, susceptibles de déposer de manière simultanée les éléments activateurs au fond d'un sillon réalisé à l'aide de moyens de creusement prévus à cet effet.

Selon une forme particulière de l'invention, les moyens d'apport en éléments activateurs, sous forme solide, se présentent sous la forme d'un réservoir, de moyens de distribution et de transport desdits éléments du réservoir au fond du sillon. Les moyens d'apport en éléments activateurs, sous forme liquide, se présentent sous la forme d'un réservoir de solution active, d'un tuyau souple raccordé à un réseau en eau, de moyens susceptibles de mélanger la solution active à l'eau, de moyens de transport permettant de guider le mélange jusqu'au fond du sillon. Les moyens mélangeurs, se présentant sous la forme d'une pompe doseuse, permettent de régler la proportion de solution active mélangée à l'eau du réseau selon les besoins

Le dispositif comprend avantageusement des moyens d'aération/décompactage/émiettage susceptibles de réaliser en une seule opération l'aération du substrat par création d'au moins un sillon, le décompactage du volume total travaillé du substrat, l'émiettage de la terre extraite dudit sillon et sa répartition homogène sur la surface du sol.

De manière avantageuse, les moyens d'aération et de décompactage comportent au moins un outil susceptible de pénétrer dans le sol et entraîné en rotation dans le sens inverse des roues du véhicule tracteur.

Le dispositif comprend des moyens de sursemis permettant de dispenser des semences de manière homogène et sur toute la largeur de travail du dispositif, et composés d'un réservoir, d'une plaque inclinée par rapport au sol et fixée à son extrémité supérieure à des moyens de distribution et de transport des semences du réservoir à la plaque.

Selon une forme de réalisation avantageuse, les moyens d'apport en éléments activateurs comprennent un soc susceptible de pénétrer dans un sillon en aval créé par les moyens d'aération/décompactage, et de préférence le soc est de largeur telle qu'il permet de glisser dans le sillon créé par les moyens d'aération/décompactage sans lisser les parois de celui-ci.

Des moyens de réglage du débit des semences et des éléments activateurs, en fonction de la vitesse d'avancement du dispositif, sont prévus.

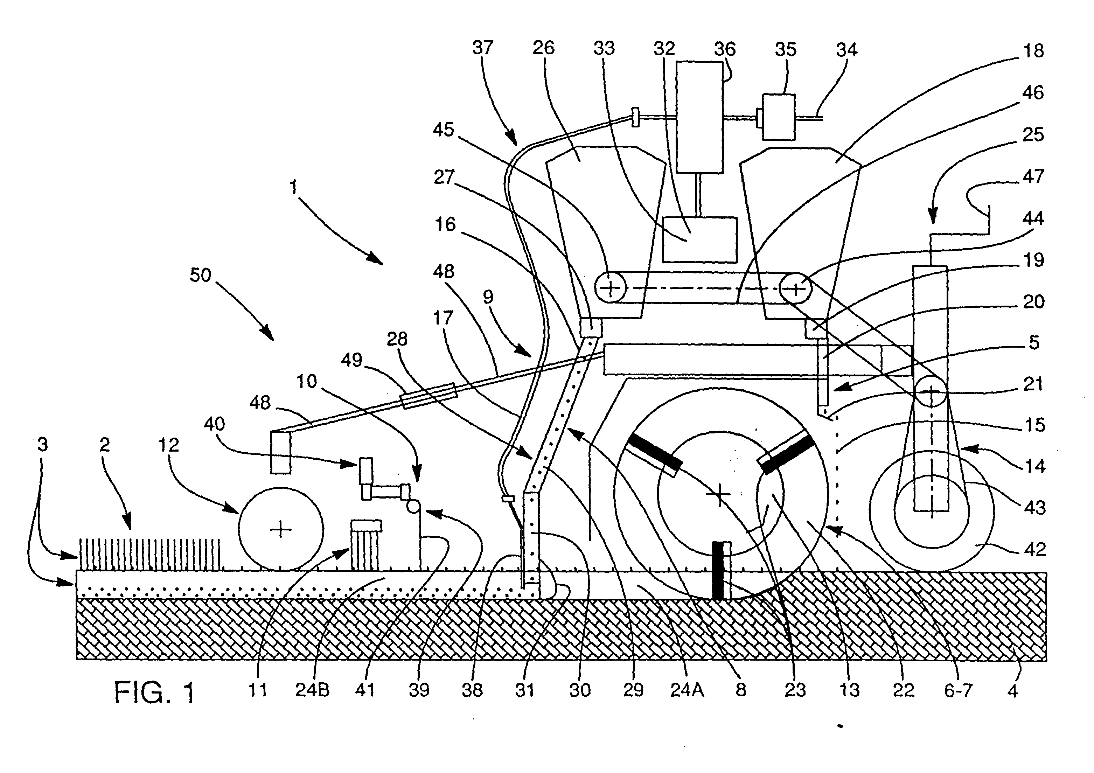

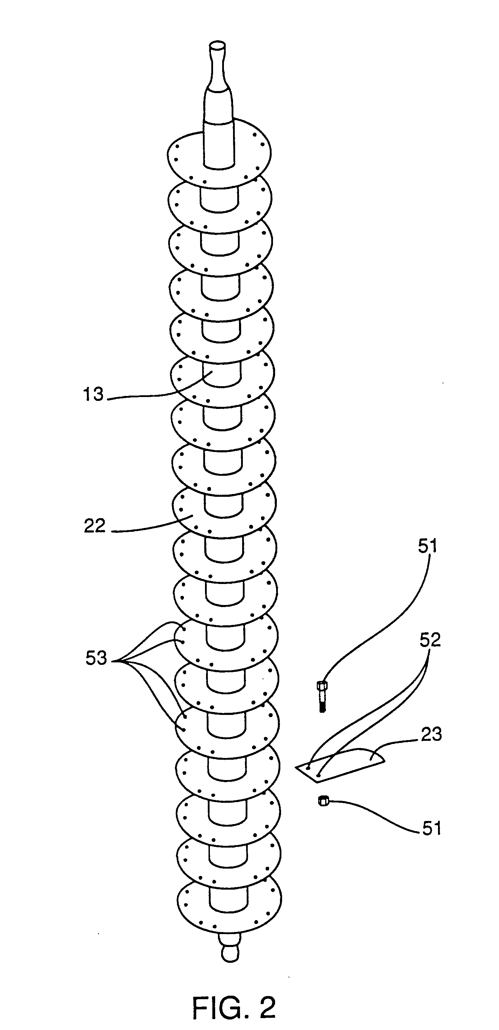

D'autres avantages et objets de l'invention, apparaîtront à la lumière de la description qui suit, se rapportant à un exemple illustratif et non limitatif de réalisation, en référence aux dessins annexés dans lesquels :
◆ la figure 1 est une vue schématique de côté du dispositif selon l'invention;
◆ la figure 2 représente une vue en perspective du rotor du dispositif selon la figure 1.

Le procédé et le dispositif pour sa mise en oeuvre selon l'invention sont décrits ci-après dans l'application au maintien ou à la remise en état d'un sol 2 à graminées 3 et, plus particulièrement, un sol gazonné à usage sportif.

Dans la description qui suit, la surface au sol est considérée comme plane. Le dispositif selon l'invention se déplace parallèlement au sol, la partie avant ou arrière de celui-ci étant considérée par rapport au sens d'avancement du dispositif.

Le terme inférieur est utilisé pour définir une proximité par rapport au sol et, à l'inverse, le terme supérieur pour qualifier un éloignement par rapport à ce dernier.

L'invention permet de réaliser, à l'aide d'un même dispositif, huit opérations.

Les huit opérations sont respectivement : le ressemis de la surface à traiter, l'aération d'un substrat 4 de terre végétale constituant une couche dans laquelle se développent les graminées et le décompactage de celui-ci, l'émiettage de la terre extraite, l'amendement du substrat sous la forme d'un apport d'éléments activateurs sous formes solide et liquide, le peignage, le balayage et le roulage de la surface à traiter.

A cet effet et comme représenté sur la figure 1, le dispositif 1 comporte des moyens 5 de ressemis, des moyens 6 d'aération et de décompactage et 7 d'émiettage, des moyens 8, 9, d'apport en éléments activateurs sous forme respectivement solide et liquide, des moyens 10 de peignage et 11 de balayage, des moyens 12 de roulage.

Le développement qui suit présente une forme de réalisation possible du dispositif 1.

Le dispositif 1 est entraîné par un véhicule tracteur non représenté. La prise de force prévue sur une des extrémités de celui-ci entraîne un arbre 13 au moyen d'un boîtier de renvoi d'angle et d'un ensemble de chaînes et pignons tendeurs de type connu, placé à l'extrémité de l'arbre 13.

Le véhicule tracteur est relié au dispositif 1 par un système de relevage à trois points de type connu, qui permet de relever le dispositif 1 à l'extrémité d'une bande de travail traitée et de le déplacer pour le positionner au début d'une bande de travail à traiter ou pour le transporter.

Les éléments constitutifs du dispositif 1 sont décrits successivement selon leur disposition depuis l'avant vers l'arrière de celui-ci.

A l'extrémité avant du dispositif 1, des moyens 14 de réglage du débit d'alimentation en semences 15 et en éléments activateurs 16, 17, en fonction de la vitesse d'avancement du dispositif, sont prévus. Ils seront décrits plus en détail par la suite.

Les moyens 5 de ressemis sont disposés à la suite des moyens 14 de réglage de débit. Ils comprennent un réservoir 18 susceptible de contenir les semences 15 de graminées. A l'extrémité inférieure avant du réservoir 18, un distributeur 19 permet de conduire les semences 15 dans un conduit 20 de forme cylindrique perpendiculaire au sol. Ce dernier transporte les semences jusqu'aux moyens 21 de dispersion. Dans la forme de réalisation décrite, les moyens 21 de dispersion se présentent sous la forme d'une plaque inclinée (par rapport à la surface du sol), reliée par son extrémité supérieure arrière à l'extrémité inférieure arrière du conduit.

Les semences provenant du réservoir 18 et guidées par le distributeur 19 et le conduit 20, tombent par gravité sur la plaque 21 inclinée, de telle manière que les semences soient disséminées de manière homogène sur toute la largeur de travail du dispositif 1. La dispersion régulière des semences de graminées 3 est obtenue par la mise en place de moyens 21 (plaques) surfaciques inclinés à la sortie du réservoir les contenant.

Des moyens 6 d'aération et de décompactage et 7 d'émiettage sont prévus à l'arrière des moyens 5 de ressemis. Comme montré sur la figure 2, ils sont constitués de flasques 22 de surface plane et circulaire, fixés par leur centre à l'arbre 13 transversal et rotatif du rotor. La surface latérale des flasques 22 est comprise dans un plan longitudinal du dispositif 1 perpendiculaire à la surface du sol (plan de la figure 1).

Les flasques 22 sont espacés les uns des autres d'une distance comprise entre 5 et 15 centimètres et de préférence d'environ 8,5 centimètres.

Selon une forme de réalisation particulière, les flasques 22 et l'arbre 13 du rotor forment un ensemble indissociable.

Des lames 23 sont supportées par les flasques 22. Dans la forme de réalisation selon la figure 1, sur chaque flasque 22 sont disposées trois lames 23 disposées radialement à 120° l'une par rapport à l'autre. Chaque lame 23 est susceptible d'être associée à un flasque 22 au moyen d'au moins un boulon 51 (vis/écrou).

Des ouvertures sont pratiquées sur l'une des extrémités de la lame 52 et la circonférence extérieure du flasque 53 de manière correspondante pour le passage du boulon.

Dans la forme de réalisation selon la figure 2, il est prévu de fixer les lames aux flasques au moyen de deux boulons 51. Les ouvertures correspondantes de la lame sont alors prévues au niveau de chaque bord de l'une des extrémités longitudinales de la lame. Les ouvertures du flasque sont prévues de manière correspondante sur le bord extérieur de celle-ci. Les lames présentent une épaisseur de 2 à 10 millimètres, de préférence entre 4 et 12 millimètres, et encore plus précisément de 8 millimètres.

Les moyens 6 d'aération permettent de réaliser des sillons 24A de la largeur des lames 23 et de profondeur réglable par l'intermédiaire de moyens 25 de réglage de profondeur explicités par la suite. La profondeur du sillon 24A est d'environ 6 à 15 centimètres.

Ces dimensions permettent d'obtenir une aération du sol durable.

Les flasques 22 sont entraînés en rotation dans le sens indiqué par la flèche sur la figure 1, à savoir le sens de rotation inverse de celui correspondant au sens du déplacement, c'est-à-dire le sens inverse de rotation des roues motrices (sens de rotation des roues du véhicule tracteur).

La rotation inverse des flasques évite une pénétration en force de ceux-ci dans le substrat 4 support du gazon (ci-après appelé le substrat 4) et les inconvénients en découlant.

Les moyens 7 d'émiettage sont également constitués par les lames 23. Comme vu précédemment, compte tenu du sens de rotation inverse des lames 23, ces dernières projettent à leur sortie du sol la terre extraite du substrat vers l'avant du dispositif et plus précisément vers le rotor.

Le décompactage résulte d'un effet de soulèvement du substrat 4 lié au sens de rotation du dispositif 7 et l'émiettage de la désagrégation des extraits de terre au contact du rotor 13 disposé à l'avant du dispositif et sur lequel ils sont projetés. De plus, la répartition de la terre extraite sur le sol est homogène.

Compte tenu de la vitesse de rotation du rotor, le décompactage est accru par rapport aux procédés et dispositifs connus. La terre extraite puis émiettée selon le procédé et le dispositif de l'invention offre une surface homogène et prête à recevoir des semences de graminées.

De plus, l'invention permet de réaliser l'aération, le décompactage et l'émiettage en une seule opération à l'aide des seuls moyens 6 d'aération et de décompactage et 7 d'émiettage (flasques 22, lames 23, rotor 13).

En aval des moyens 6 d'aération/décompactage et 7 d'émiettage, les moyens 8, 9, d'apport en éléments activateurs sont composés de moyens distincts d'apport 8 en éléments activateurs sous forme solide, et 9 sous forme liquide. Les éléments activateurs 16, 17 sont destinés à améliorer, engraisser, amender, le substrat 4, et plus précisément les graminées 3 présentes dans celui-ci.

Les moyens 8 d'apport en éléments activateurs sous forme solide comportent un réservoir 26 contenant lesdits éléments activateurs 16. Un distributeur 27 situé à l'extrémité inférieure arrière du réservoir 26 permet de répartir lesdits éléments dans un conduit 28 en deux parties. La première partie 29 supérieure est inclinée par rapport au sol et la deuxième partie 30 inférieure est perpendiculaire par rapport à celui-ci.

L'extrémité inférieure du conduit 28 d'éléments activateurs, et plus précisément de la deuxième partie 30 de celui-ci, est placée, à l'aide de moyens 25 de réglage, à proximité du fond des sillons 24A pratiqués par les moyens 6 d'aération (flasques 22 et lames 23). De cette manière, les éléments 8 activateurs s'écoulent par gravité le long du conduit 28 pour être déposés précisément au fond des sillons 24 précédemment créés.

Des moyens 31 de creusement, sous la forme d'un soc creux, sont prévus à l'avant du conduit 28 au niveau de l'extrémité inférieure de celui-ci. Le soc 31 est destiné à s'introduire dans le substrat 4 pour former un sillon 24B dans le prolongement du sillon 24A. Le soc 31 pénètre plus précisément dans les sillons 24A réalisés par les flasques 22 et permet au conduit 28 le succédant d'acheminer les éléments activateurs solides jusqu'au fond des sillons 24A. Le soc 31 est de largeur telle qu'il puisse de s'introduire dans le sillon 24A sans lisser ses parois.

La partie 29 du conduit 28 est composé de deux sections : la section inférieure coulisse dans la section supérieure de diamètre plus grand de manière à permettre de relever les moyens 31 hors du sol.

Le dispositif selon l'invention permet un apport en éléments activateurs sous forme solide en profondeur, supprimant tous les problèmes causés par un apport en surface et explicités précédemment.

Les moyens 9 d'apport en éléments activateurs liquides comprennent un réservoir 32 de solution 33 active disposé entre les réservoirs 18 de semences et 26 d'éléments 16 activateurs solides.

Un tuyau 34 souple permet de raccorder le dispositif 1 au réseau d'alimentation en eau, et plus particulièrement un robinet ou un clapet-vanne, à des moyens 35 de régulation de pression et de débit situés au niveau supérieur du dispositif 1.

Les moyens 35 de régulation permettent de distribuer l'eau à flux constant et prédéterminé vers des moyens 36 de régulation en proportion de solution active reliés au réservoir 32. Les moyens 36 de régulation se présentent sous la forme d'une pompe doseuse, qui permet de mélanger la solution 33 active au courant d'eau à flux constant et d'en modifier la proportion suivant les besoins.

Des moyens de transport de la solution active, sous la forme d'un tuyau souple 37, sont prévus à la sortie arrière de la pompe 36 pour transporter le mélange de solution active à l'eau jusqu'à un injecteur 38, le mélange s'écoulant dans lesdits moyens sous l'effet de la pression.

L'injecteur 38 est placé à l'arrière du soc 31 en parallèle avec la partie verticale 30 du conduit 28 d'éléments activateurs solides.

Ainsi, et de la même façon que pour les éléments 16 activateurs solides, les éléments activateurs 17 liquides sont projetés au fond du sillon 24B par le soc 31, en combinaison avec les lames 23 d'aération. Les problèmes de l'art antérieur découlant d'un apport en surface sont également résolus concernant les éléments activateurs sous forme liquide.

A la suite des moyens d'apports en éléments activateurs, les moyens 10 de peignage sous la forme d'une herse 39 sont mis en fonctionnement au moyen d'un mécanisme 40 hydraulique, de type connu, adapté au système hydraulique du véhicule tracteur.

Les dents 41 de la herse sont mis en mouvement alternatif selon une direction perpendiculaire au sens d'avancement du dispositif 1, de manière à mélanger la terre extraite par les moyens 6 d'aération aux semences 15 délivrées par les moyens 5 de ressemis. On obtient ainsi une dissémination régulière et homogène des extraits de terre et un mélange cohérent de ceux-ci avec les semences de graminées.

Des moyens de balayage 11, sous la forme d'un balai, sont ensuite prévus pour compléter et parachever le travail de la herse (dispersion du mélange terre-semences).

Dans le cas où cette opération est précédée d'une opération de sablage, l'opération de balayage permet l'épandage régulier du sable déposé.

Des moyens 12 de roulage, sous la forme d'un rouleau, sont disposés à l'extrémité arrière du dispositif 1, de manière à plomber le substrat 4 et à incorporer les semences 15 en contact avec la surface au sol, dans la couche superficielle du substrat.

Le dispositif et le procédé selon l'invention sont susceptibles de réaliser la totalité de ces opérations (ressemis, aération, décompactage, amendement, peignage, balayage, roulage) ou une partie seulement d'entre elles, dans un ordre identique ou différent.

Les moyens 14 de réglage du débit d'alimentation en semences et en éléments activateurs solides comprennent une roue 42 en contact avec le sol, à l'extrémité avant du dispositif 1, permettant d'entraîner des chaînes 43 à la vitesse d'avancement du dispositif 1. Les chaînes 43 mettent en mouvement un pignon 44 assurant la régulation de l'alimentation des semences 15 du réservoir 18 de semences vers le distributeur 19. La régulation obtenue par le pignon 44 est fonction de la vitesse d'entraînement des chaînes 43, et donc de la vitesse d'avancement du dispositif 1.

Un pignon 45 est prévu pour réguler l'alimentation du réservoir 26 d'éléments 16 activateurs solides au distributeur 27 correspondant, de manière identique au pignon 44 précédent. Il est associé au pignon 44 par l'intermédiaire de chaînes 46. Ainsi, de la même façon que précédemment, la régulation de l'alimentation en éléments activateurs solides dépend de la vitesse d'entraînement des chaînes, et donc de la vitesse d'avancement du dispositif 1.

Le dispositif comprend également des moyens 25 de réglage (manivelle 47 disposée au dessus de la roue 42) de la hauteur du châssis avant par rapport au sol.

Les moyens arrières de réglage de profondeur 50 sont constitués par des axes mâles filetés 48 et un manchon femelle double à filetage intérieur 49. La rotation dans un sens ou dans l'autre du manchon 49 permet d'allonger ou de raccourcir le dispositif 50 réglant la hauteur du châssis arrière par rapport au sol.

La combinaison des moyens de réglage 25 et 50 permet de positionner l'ensemble du châssis du dispositif 1 de façon parallèle et à une distance définie par rapport au sol 4 et de cette manière la profondeur de travail dans le sol, liée à la hauteur du châssis par rapport au sol, des moyens 6 d'aération/décompactage, et plus particulièrement des lames 23, ainsi que des moyens 8, 9, d'apport en éléments activateurs, et plus particulièrement du soc 31, des moyens 10 de peignage et 11 de balayage et des moyens 12 de roulage.

## Revendications

1. Procédé de traitement d'une surface au sol (2), et plus particulièrement du substrat (4) de terre végétale porteur de graminées (3) tel que du gazon, par déplacement d'un dispositif (1), **caractérisé en ce que** l'on réalise en une seule opération l'aération du substrat (4) par création d'au moins un sillon (24A), le décompactage du volume total travaillé du substrat, l'émiettage de la terre extraite dudit sillon (24A) et sa répartition homogène sur la surface du sol (2).

2. Procédé selon la revendication 1, **caractérisé en ce que** l'on crée ledit sillon (24A) à l'aide d'un outil (6) pénétrant dans le sol (2) et entraîné en rotation dans le sens inverse de celui correspondant au sens d'avancement du dispositif, ce dernier comprenant des moyens (13) propres à réaliser le décompactage du substrat et l'émiettage de la terre extraite du sillon.

3. Procédé selon l'une des revendications 1ou 2, **caractérisé en ce que** l'on réalise des sillons (24A) de largeur comprise entre 4 et 12 millimètres, et de profondeur entre 6 et 15 centimètres.

4. Procédé selon l'une des revendications 1 à 3, **caractérisé en ce que** l'on répand des semences (15) de manière homogène et sur toute la largeur de travail.

5. Procédé selon l'une des revendications 1 à 4, **caractérisé en ce que** l'on déplace au moins un soc (31), prévu sur le dispositif (1), dans le sillon (24A) créé par les moyens (6) d'aération et **en ce que** l'on dépose des éléments activateurs (16-17) au fond du sillon (24B) après le passage des moyens d'aération\décompactage (6) et du soc.

6. Procédé selon l'une des revendications précédentes, **caractérisé en ce que** l'on réalise un peignage et un balayage de la surface au moyen de systèmes (10-11) munis d'outils à mouvements alternatifs perpendiculaires au sens de déplacement du dispositif.

7. Procédé selon les revendications 1, 4, 5 et 6, **caractérisé en ce que** les opérations d'aération, décompactage et d'émiettage, de sursemis, d'apport en éléments activateurs, de peignage, de balayage ainsi qu'une opération de roulage, sont réalisées à l'aide du même dispositif (1).

8. Dispositif de traitement d'une surface au sol (2), et plus particulièrement du substrat (4) de terre végétale porteur de graminées (3) tel que du gazon, susceptible d'être associé à un véhicule tracteur, **caractérisé en ce qu'**il comporte des moyens d'aération/décompactage/émiettage (6-7) susceptibles de réaliser en une seule opération, l'aération du substrat (4) par création d'au moins un sillon (24A), le décompactage du volume total travaillé du substrat, l'émiettage de la terre extraite dudit sillon (24A) et sa répartition homogène sur la surface du sol (2).

9. Dispositif selon la revendication précédente, **caractérisé en ce que** les moyens d'aération et de décompactage (6-7) comportent au moins un outil (22) susceptible de pénétrer dans le sol et entrainé en rotation dans le sens inverse des roues du véhicule tracteur et les moyens d'émiettage comprennent un rotor disposé à l'avant du dispositif sur lequel la terre extraite est projetée.

10. Dispositif selon l'une des revendications 8 ou 9, **caractérisé en ce que** les moyens d'aération/décompactage comprennent trois lames disposées radialement à 120° l'une de l'autre.

11. Dispositif selon l'une des revendications 8 à 10, **caractérisé en ce qu'**il comporte des moyens d'apport (9) en éléments activateurs, sous forme liquide, se présentant sous la forme d'un réservoir (32) de solution (33) active, d'un tuyau souple (34) raccordé à un réseau en eau, de moyens (36) susceptibles de mélanger la solution active à l'eau, de moyens de transport (37) permettant de guider le mélange jusqu'au fond du sillon.

12. Dispositif selon la revendication précédente, **caractérisé en ce que** les moyens (36) mélangeurs, se présentant sous la forme d'une pompe doseuse, permettent de régler la proportion de solution active mélangée à l'eau du réseau selon les besoins.

13. Dispositif selon l'une des revendications 8 à 12, **caractérisé en ce qu'**il comprend des moyens de sursemis (5) permettant de dispenser des semences de manière homogène et sur toute la largeur de travail du dispositif.

14. Dispositif selon la revendication précédente, **caractérisé en ce que** les moyens de sursemis (5) sont composés d'une réservoir (18) d'un conduit (20) destiné à guider les semences provenant dudit réservoir, d'une plaque inclinée (21) par rapport au sol et fixée à son extrémité supérieure au conduit (20) de manière que les semences tombent par gravité sur celle-ci.

15. Dispositif selon la revendication 8, **caractérisé en ce qu'**il comporte des moyens d'apport en éléments activateurs comprenant un soc (31) susceptible de pénétrer dans un sillon (24A) en aval créé par des moyens d'aération/décompactage (6).

16. Dispositif selon la revendication précédente, **caractérisé en ce que** le soc est de largeur telle qu'il permet de glisser dans le sillon créé par les moyens d'aération/décompactage (6) sans lisser les parois de celui-ci.

## Patentansprüche

1. Verfahren zur Bearbeitung einer Bodenfläche (2), insbesondere des Substrates (4) aus Mutterboden, das Gräser (3), wie etwa Rasen, trägt, durch Bewegung einer Vorrichtung (1), **dadurch gekennzeichnet, dass** in einem einzigen Arbeitsgang die Belüftung des Substrates (4) durch Schaffung mindestens einer Furche (24A), die Lockerung des gesamten bearbeiteten Volumens des Substrates, die Zerbröckelung der der genannten Furche (24A) entnommenen Erde und deren homogene Verteilung auf der Bodenfläche (2) erfolgt.

2. Verfahren nach Patentanspruch 1, **dadurch gekennzeichnet, dass** die genannte Furche (24A) mit Hilfe eines Werkzeuges (6) gezogen wird, das in den Boden (2) eindringt und in der Richtung zur Rotation angetrieben wird, die der der Fortbewegung der Vorrichtung entgegengerichtet ist, wobei diese letztere Mittel (13) umfasst, die zur Auflockerung des Substrates und Zerbröckelung der der Furche entnommenen Erde geeignet sind.

3. Verfahren nach einem der Patentansprüche 1 oder 2, **dadurch gekennzeichnet, dass** Furchen (24A) einer Breite zwischen 4 und 12 Millimetern und einer Tiefe von 6 bis 15 Zentimetern gezogen werden.

4. Verfahren nach einem der Patentansprüche 1 bis 3, **dadurch gekennzeichnet, dass** Samen (15) homogen und über die ganze Arbeitsbreite verteilt werden.

5. Verfahren nach einem der Patentansprüche 1 bis 4, **dadurch gekennzeichnet, dass** mindestens eine an der Vorrichtung (1) vorgesehene Pflugschar (31) in der Furche (24A) bewegt wird, die durch die Mittel (6) zur Belüftung geschaffen wurde, und dadurch, dass nach Durchgang der Belüftungs-/ Auflockerungsmittel (6) und der Pflugschar Aktivierungsmittel (16 - 17) auf den Boden der Furche (24B) gebracht werden.

6. Verfahren nach einem der vorangehenden Patentansprüche, **dadurch gekennzeichnet, dass** ein Kämmen und ein Kehren der Fläche durch Systeme (10 - 11) erfolgt, die mit sich senkrecht zur Fortbewegungsrichtung der Vorrichtung hin- und herbewegenden Werkzeugen ausgerüstet sind.

7. Verfahren nach den Patentansprüchen 1, 4, 5 und 6, **dadurch gekennzeichnet, dass** die Arbeitsgänge Belüftung, Auflockerung und Zerbröckelung, Nachsäen, Einbringung von Aktivierungsmitteln, Kämmen, Kehren, sowie ein Arbeitsgang Walzen, mit Hilfe derselben Vorrichtung (1) ausgeführt werden.

8. Vorrichtung zur Bearbeitung einer Bodenfläche (2), insbesondere des Substrates (4) aus Mutterboden, das Gräser (3), wie etwa Rasen, trägt, geeignet, an ein Schleppfahrzeug gekuppelt zu werden, **dadurch gekennzeichnet, dass** sie Mittel zur Belüftung/Auflockerung/Zerbröckelung (6 - 7) umfasst, die geeignet sind, in einem einzigen Arbeitsgang die Belüftung des Substrates (4) durch Schaffung mindestens einer Furche (24A), die Lockerung des gesamten bearbeiteten Volumens des Substrates, die Zerbröckelung der der genannten Furche (24A) entnommenen Erde und deren homogene Verteilung auf der Bodenfläche (2) auszuführen.

9. Vorrichtung nach dem vorangehenden Patentanspruch, **dadurch gekennzeichnet, dass** die Belüftungs- und Auflockerungsmittel (6 - 7) mindestens ein Werkzeug (22) umfassen, das geeignet ist, in den Boden einzudringen und das in der Richtung zur Rotation angetrieben wird, die der der Räder des Schleppfahrzeuges entgegenrichtet ist, und die Zerbröckelungsmittel einen Rotor umfassen, der vorne an der Vorrichtung angeordnet ist, auf den die entnommene Erde geworfen wird.

10. Vorrichtung nach einem der Patentansprüche 8 oder 9, **dadurch gekennzeichnet, dass** die Mittel zur Belüftung/ Auflockerung drei Klingen umfassen, die radial im Abstand von 120° voneinander angeordnet sind.

11. Vorrichtung nach einem der Patentansprüche 8 bis 10, **dadurch gekennzeichnet, dass** sie Mittel zum Einbringen (9) von Aktivierungsmitteln in flüssiger Form umfasst, die aus einem Behälter (32) mit aktiver Lösung (33) besteht, einem Schlauch (34), der an ein Wassernetz angeschlossen ist, Mitteln (36), die geeignet sind, die aktive Lösung mit Wasser zu mischen, Transportmitteln (37), die erlauben, das Gemisch bis auf den Boden der Furche zu leiten.

12. Vorrichtung nach dem vorangehenden Patentanspruch, **dadurch gekennzeichnet, dass** die Mischmittel (36) aus einer Dosierpumpe bestehen, die den Anteil an aktiver Lösung nach Bedarf zu regulieren erlaubt, der mit dem Wasser des Netzes gemischt wird.

13. Vorrichtung nach einem der Patentansprüche 8 bis 12, **dadurch gekennzeichnet, dass** sie Mittel zum Nachsäen (5) umfasst, die erlauben, Saat homogen und über die ganze Arbeitsbreite der Vorrichtung abzugeben.

14. Vorrichtung nach dem vorangehenden Patentanspruch, **dadurch gekennzeichnet, dass** die Nachsämittel (5) aus einem Behälter (18) bestehen, einer Leitung (20), die dazu dient, die Samen zu führen, die aus dem genannten Behälter kommen, einer relativ zum Boden geneigten und an ihrem oberen Ende derart an der Leitung (20) befestigten Platte (21), dass die Samen durch Schwerkraft auf diese fallen.

15. Vorrichtung nach Patentanspruch 8, **dadurch gekennzeichnet, dass** sie Mittel zum Einbringen von Aktivierungsmitteln umfasst, die aus einer Pflugschar (31) bestehen, die geeignet ist, hinten in eine Furche (24A) einzudringen, die von Belüftungs-/ Auflockerungsmitteln (6) gezogen wurde.

16. Vorrichtung nach dem vorangehenden Patentanspruch, **dadurch gekennzeichnet, dass** die Pflugschar so breit ist, dass sie geeignet ist, in der von den Belüftungs-/Auflockerungsmitteln (6) gezogenen Furche zu gleiten, ohne deren Wände zu glätten.

## Claims

1. Process for treating a ground surface (2), and more particularly the substrate (4) of grass-bearing humus (3) such as turf, by displacement of a device (1), **characterized in that** there is effected in one sole operation the aeration of the substrate (4) by creation of at least one furrow (24A), the decompacting of the total volume of the substrate worked, the crumbling of the earth extracted from said furrow (24A) and its homogeneous distribution over the surface of the ground (2).

2. Process according to Claim 1, **characterized in that** said furrow (24A) is created with the aid of a tool (6) penetrating in the ground (2) and driven in rotation in the direction opposite that corresponding to the direction of advance of the device, the latter comprising means (13) adapted to effect decompacting of the substrate and crumbling of the earth extracted from the furrow.

3. Process according to one of Claims 1 or 2, **characterized in that** furrows (24A) are made, of width included between 4 and 12 millimeters, and of depth between 6 and 15 centimeters.

4. Process according to one of Claims 1 to 3, **characterized in that** seeds (15) are sown homogeneously and over the whole working width.

5. Process according to one of Claims 1 to 4, **characterized in that** at least one ploughshare (31), provided on the device (1), is displaced in the furrow (24A) created by the aeration means (6) and **in that** activator elements (16-17) are deposited at the bottom of the furrow (24B) after the passage of the aeration/decompacting means (6) and of the ploughshare.

6. Process according to one of the preceding Claims, **characterized in that** the surface is combed and swept by means of systems (10-11) provided with tools having reciprocating movements perpendicular to the direction of displacement of the device.

7. Process according to Claims 1, 4, 5 and 6, **characterized in that** the operations of aeration, decompacting and of crumbling, of sowing, of supplying activator elements, of combing, of sweeping, as well as an operation of rolling, are carried out with the aid of the same device (1).

8. Device for treating a ground surface (2), and more particularly the substrate (4) of grass-bearing humus (3) such as turf, capable of being associated with a tractor vehicle, **characterized in that** it comprises aeration/decompacting/crumbling means (6-7) capable of carrying out in one sole operation, the aeration of the substrate (4) by creation of at least one furrow (24A), the decompacting of the total volume of the substrate worked, the crumbling of the earth extracted from said furrow (24A) and its homogeneous distribution over the surface of the ground (2).

9. Device according to the preceding Claim, **characterized in that** the aeration and decompacting means (6-7) comprise at least one tool (22) capable of penetrating in the ground and driven in rotation in the direction opposite the wheels of the tractor vehicle, and the crumbling means comprise a rotor disposed at the front of the device onto which the extracted earth is projected.

10. Device according to one of Claims 8 or 9, **characterized in that** the aeration/decompacting means comprise three blades disposed radially at 120° with respect to one another.

11. Device according to one of Claims 8 to 10, **characterized in that** it comprises means (9) for supplying activator elements, in liquid form, presented in the form of a reservoir (32) of active solution (33), a flexible pipe (34) connected to a water network, means (36) capable of mixing the active solution with the water, transport means (37) making it possible to guide the mixture as far as the bottom of the furrow.

12. Device according to the preceding Claim, **characterized in that** the mixing means (36), presented in the form of a metering pump, make it possible to adjust the proportion of active solution mixed with the water network as a function of needs.

13. Device according to one of Claims 8 to 12, **characterized in that** it comprises sowing means (5) for distributing seeds in homogeneous manner and over the whole working width of the device.

14. Device according to the preceding Claim, **characterized in that** the sowing means (5) are composed of a reservoir (18) of a conduit (20) intended to guide the seeds coming from said reservoir, of a plate (21) inclined with respect to the ground and fixed at its upper end to the conduit (20) so that the seeds fall by gravity thereon.

15. Device according to Claim 8, **characterized in that** it comprises means for supplying activator elements comprising a ploughshare (31) capable of penetrating in a downstream furrow (24A) created by aeration/compacting means (6).

16. Device according to the preceding Claim, **characterized in that** the ploughshare is of width such that it makes it possible to slide in the furrow created by the aeration/decompacting means (6) without smoothing the walls thereof.
